(19) Europäisches Patentamt

European Patent Office

Office européen des brevets

(11) Veröffentlichungsnummer: **0 362 733 B1**

(12) **EUROPÄISCHE PATENTSCHRIFT**

(45) Veröffentlichungstag der Patentschrift: **20.10.93**

(21) Anmeldenummer: **89118148.9**

(22) Anmeldetag: **30.09.89**

(51) Int. Cl.⁵: **G01N 15/04**, B04B 5/04

(54) **Ultrazentrifuge zur Bestimmung von Teilchengrössenverteilungen.**

(30) Priorität: **06.10.88 DE 3833974**

(43) Veröffentlichungstag der Anmeldung:
**11.04.90 Patentblatt 90/15**

(45) Bekanntmachung des Hinweises auf die
Patenterteilung:
**20.10.93 Patentblatt 93/42**

(84) Benannte Vertragsstaaten:
**CH DE FR GB IT LI**

(56) Entgegenhaltungen:
DE-A- 2 031 058    DE-A- 2 324 879
DE-B- 1 498 618    GB-A- 2 018 981
US-A- 3 518 012    US-A- 4 090 795

(73) Patentinhaber: **BAYER AG**

**D-51368 Leverkusen(DE)**

(72) Erfinder: **Müller, Hans Georg, Dr.**
**Am alten Broich 102**
**D-4018 Langenfeld(DE)**
Erfinder: **Hartung, Horst**
**Heymannstrasse 45**
**D-5090 Leverkusen 1(DE)**
Erfinder: **Lange, Heinz, Dr.**
**Karl-Huschens-Strasse 3**
**D-5653 Leichlingen 1(DE)**

## Beschreibung

Die Erfindung betrifft eine Ultrazentrifuge zur Bestimmung der massenmäßigen Teilchengrößenverteilung von Dispersionen, gemäß Oberbegriff des Anspruchs 1. Aus der Teilchengrößenverteilung lassen sich dann in bekannter Weise die Teilchendichteverteilung, sowie Quellungsgrade oder Quellungsgradverteilungen von Dispersionen ermitteln.

Die Bestimmung der Teilchengrößenverteilung mit Hilfe der Ultrazentrifuge und der Lichtabsorptionsmethode ist seit vielen Jahren bekannt (siehe etwa US-A-3,518,012). Dabei wird die Sedimentation der Teilchen in einer mit Fenstern versehenen Ultrazentrifugenzelle mit Hilfe einer optischen Zusatzeinrichtung beobachtet und registriert. Gemessen wird die Intensität des durch den Zellenspalt fallenden Lichtes in Abhängigkeit von der Zeit und der Zentrifugalbeschleunigung. Bei diesem Verfahren wird also die zeitliche Änderung der Lichtdurchlässigkeit und damit der Konzentration an einem Ort der Ultrazentrifugenzelle während der Sedimentation der Teilchen bestimmt und daraus die Teilchengrößenverteilung ermittelt. Eine detaillierte Beschreibung dieser Methode findet sich bei W. Scholtan, H. Lange, Kolloid-Z. und Z. Polymere 250 (1972) 782. Das Zellmittelstück der Meßzelle, in die die zu untersuchende Probe gefüllt ist, besteht üblicherweise aus Kunststoff. Der Zellenspalt für den Durchtritt des Lichtes ist sektorförmig mit einem Sektorwinkel von in der Regel 4° ausgebildet.

Es hat sich herausgestellt, daß bei Anwendung dieser Meßtechnik auf Teilchengrößenverteilungen von Dispersionen mit Durchmessern >400 nm oder solchen, die überwiegend derartig große Teilchen enthalten, eine systematische Verfälschung der Meßergebnisse eintritt. Die experimentell erhaltenen Verteilungen sind gegenüber den zu erwartenden stark verbreitert und zeigen statt einer beispielsweise zu erwartenden einheitlichen Teilchengröße von z.B. ca. 420 nm eine von 250 nm bis 500 nm reichende Verteilung.

Es wurde nun gefunden, daß man richtige Meßergebnisse, d.h. zutreffende Teilchengrößenverteilungen, auch bei Dispersionen mit Durchmessern >400 nm erhält, wenn man Ultrazentrifugenzellen mit Mittelstücken verwendet, die einen Sektorwinkel $\alpha$ von nur 1,0° bis 1,9° aufweisen.

Vorzugsweise ist das Zellmittelstück aus einem gegenüber wäßrigen basischen Medien resistenten Metall, z.B. aus Titan, gefertigt.

Dieser Fortschritt gegenüber dem Stand der Technik wurde dadurch erzielt, daß die als fotoelektrischer Detektor in der optischen Zusatzeinrichtung verwendete Pin-Diode mit ihrer schnellen effektiven Anstiegszeit (ca. 0,2 x 10$^{-6}$ s) dazu eingesetzt wurde, Messungen des Querprofils der Lichtdurchlässigkeit einer Ultrazentrifugenzelle durchzuführen.

Diese in der Ultrazentrifugentechnik gänzlich neuartige Möglicheit führte zur Entdeckung von das Sedimentationsverhalten störenden Konvektionsströmungen, welche die eben beschriebene Verfälschung der Meßergebnisse bewirken.

Diese Konvektionsströmungen wurden dann durch Einsatz von Metall (Titan) als Zellmaterial und die beschriebene Reduktion des Zellwinkels beseitigt.

Zusätzlich erfolgte eine Weiterentwicklung, die darin besteht, daß die Zentrifugenzelle als Doppelsektorzelle ausgebildet ist.

Hier bietet die Pin-Diode mit ihrer schnellen effektiven Anstiegszeit zusätzlich die Möglichkeit, die in den zwei Sektoren der Doppelsektorzelle ablaufenden Sedimentationsvorgänge getrennt zu erfassen. Damit können in je einer Zelle eines Mehrlochrotors zwei unterschiedliche Substanzen bezüglich ihrer Teilchengrößenverteilung gleichzeitig untersucht werden, z.B. in einem Achtlochrotor anstelle von 7 Proben 14 Proben.

Bei einer Beschickung der Zellen mit unterschiedlichen Proben muß eine Zuordnung (Markierung) der nacheinander am Fotoempfänger anstehenden Zellensignale zu den einzelnen Proben erfolgen. Zu diesem Zweck ist bei der ersten Variante der Zuordnung am Rotor eine Reflexlichtschranke angebracht, die bei jeder Umdrehung des Rotors ein Steuersignal liefert und damit eine Erkennung und Zählung der nacheinanderfolgenden Zellen ermöglicht. Die zweite Variante der Zuordnung kommt ohne Steuerscheibe aus und verwendet das Meßsignal einer proben- und fensterlosen Zelle als Bezugspunkt. Die bei dieser zweiten Ausführungsform verwendete neuartige Totaldigitalisierung bietet die bisher noch nicht bestehende Möglichkeit der Bestimmung von Feinstanteilen in Dispersionen.

Die erfindungsgemäße Ultrazentrifuge ermöglicht überraschenderweise eine einwandfreie Bestimmung der Teilchengrößenverteilung von Dispersionen, die einen größeren Teilchendurchmesser als 400 nm besitzen oder überwiegend derartige Teilchen enthalten sowie eine Bestimmung von Feinstanteilen in Dispersionen. Dies ist ein wesentlicher Fortschritt für die Dispersionsanalysentechnik, da die massenanteilsmäßige Bestimmung solcher Dispersionen bisher überhaupt noch nicht möglich war. Die neue Ultrazentrifuge ermöglicht es, im Teilchendurchmesserbereich von 10 nm bis 10 000 nm in einer Zelle mindestens 7 unterschiedliche Partikelgrößen zu erkennen und massenanteilsmäßig genau zu bestimmen. Es können sogar Latices basislinienmäßig getrennt werden, die sich nur um 10 % im Durchmesser unterscheiden. Mit dieser Verbesserung ist das Ultrazentrifugenverfahren allen anderen Meßmethoden weit überlegen. Es war nicht vorherzusehen, daß man durch eine Verkleinerung des Sektorwinkels und durch die Verwendung eines Mittelstückes aus Metall einen derartigen Fortschritt erzielen kann.

Bei Latices aus Copolymeren liefert die Bestimmung einer aus der Teilchengrößenverteilung ableitbaren Größe die Möglichkeit, mit relativ wenig Aufwand eine Bestimmung der Teilchendichteverteilung vorzunehmen, die einen umfassenden Einblick in die Pfropfstruktur dieser Produkte liefert. Diese ließ sich bisher nur über eine sehr aufwendige präparative Fraktionierung mit vielen Redispergierungsschritten realisieren.

Bei Latices aus Homo- und Copolymeren läßt sich eine Bestimmung des Quellungsgrades oder der Quellungsgradverteilung mit der analytischen Ultrazentrifuge vornehmen, wenn die Teilchengrößenverteilung vorher gemessen wurde.

Im folgenden wird ein Ausführungsbeispiel der Erfindung anhand von Zeichnungen und Meßbeispielen beschrieben. Es zeigen:

| | |
|---|---|
| Fig. 1 | eine schematische Darstellung der Rotorkammer und die optische Zusatzeinrichtung zur Messung der Lichtdurchlässigkeit, |
| Fig. 2a u 2b | die für die Aufnahme der Proben bestimmten Zellmittelstücke in perspektivischer Darstellung, |
| Fig. 3 | die schaltungstechnische Zuordnung der Zellsignale vom Mehrlochrotor, |
| Fig. 4 | das Prinzip der Zeitauflösung zur Bestimmung der ortsabhängigen Lichtdurchlässigkeit quer zur Ultrazentrifugenzelle (Querprofil), |
| Fig. 5a | das Lichtdurchlässigkeitsquerprofil einer Ultrazentrifugenzelle in Höhe der Zellmitte während des Sedimentationsvorganges eines einheitlichen Latex bei einer durch Konvektion gestörten Sedimentation bzw. Flotation, bzw. bei |
| Fig. 5b | ungestörter Sedimentation (Flotation), |
| Fig. 6 | ein Blockschaltbild für die Meßdatenerfassung und -verarbeitung, |
| Fig. 7 | die bei einem Eichlatex mit der neuen Ultrazentrifuge gemessene differentielle und integrale Teilchengrößenverteilung, |
| Fig. 8 | die bei demselben Eichlatex nach dem Stand der Technik gemessene integrale Teilchen- |

größenverteilung und

| | |
|---|---|
| Fig. 9 | die Erkennung von Feinstanteilen in Dispersionen mittels der neuen Ultrazentrifuge in Verbindung mit einer verbesserten elektronischen Zuordnung der digitalisierten Meßsignale. |

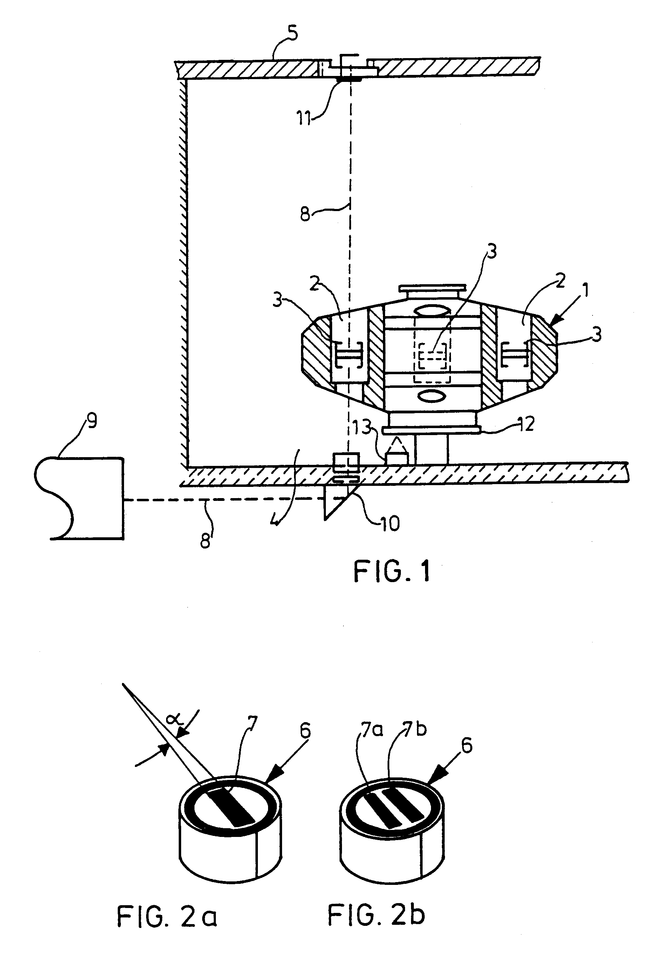

Die Ultrazentrifuge gemäß Fig. 1 besteht im wesentlichen aus einem Mehrlochrotor 1 mit Aufnahmeschächten 2 für die Meßzellen 3. Der Mehrlochrotor 1 befindet sich in einer Zentrifugenkammer 4, die nach oben hin durch den Kammerdeckel 5 abgeschlossen ist. Die weiteren Bestandteile wie Antrieb und Gehäuse sind hier nicht eingezeichnet.

Die Probenkammer, die die zu untersuchende Dispersion aufnimmt, ist in dem zylindrischen Zellmittelstück der Meßzelle 3 untergebracht und besteht entweder aus einem sektorförmigen Spalt 7 (Fig. 2a) oder aus zwei nebeneinanderliegenden Sektorspalten 7a, 7b (Fig. 2b). Die zuletztgenannte Ausführung (gemäß Fig. 2b) wird daher auch als Doppelsektorzelle bezeichnet. An der Ober- und Unterseite des Zellmittelstücks sind die sektorförmigen Spalte 7 bzw. 7a, 7b mit einem Saphirfenster für den Durchtritt eines Lichtstrahls 8 versehen. Der Sektorwinkel $\alpha$ für die Spalte 7, 7a, 7b ist auf den Bereich von 1,0° bis 1,9° reduziert und beträgt hier z.B. 1,5°. Das Mittelstück 6 wurde aus Titanmetall gefertigt.

Das Meßprinzip beruht darauf, daß die Lichtdurchlässigkeit der im Sektorspalt befindlichen Dispersionsprobe als Funktion der Zeit registriert wird. Zu diesem Zweck ist eine optische Zusatzeinrichtung vorgesehen, die aus einem Laser 9, einem Umlenkprisma 10 und einem Fotoempfänger 11 besteht. Der vom Laser 9 erzeugte, scharf gebündelte Lichtstrahl 8 passiert den Sektorspalt 7 des Zellmittelstücks 6 mit der darin befindlichen Probe etwa in der Mitte und tritt anschließend auf den Fotoempfänger 11. Als Fotoempfänger wird hier eine Pin-Diode vom Typ S 1337-66 BR der Fa. Hamamatsu mit einer Fläche von 5,9 x 5,9 mm und einer effektiven Anstiegszeit von ca. $0,2 \times 10^{-6}$ s, die im Ultrazentrifugenkammerdeckel 5 eingebaut ist, anstelle eines herkömmlichen, relativ langsamen Fotomultipliers verwendet.

Dies bietet die in der Ultrazentrifugentechnik gänzlich neuartige Möglichkeit, Messungen des Querprofils der Lichtdurchlässigkeit von Ultrazentrifugenzellen durchzuführen.

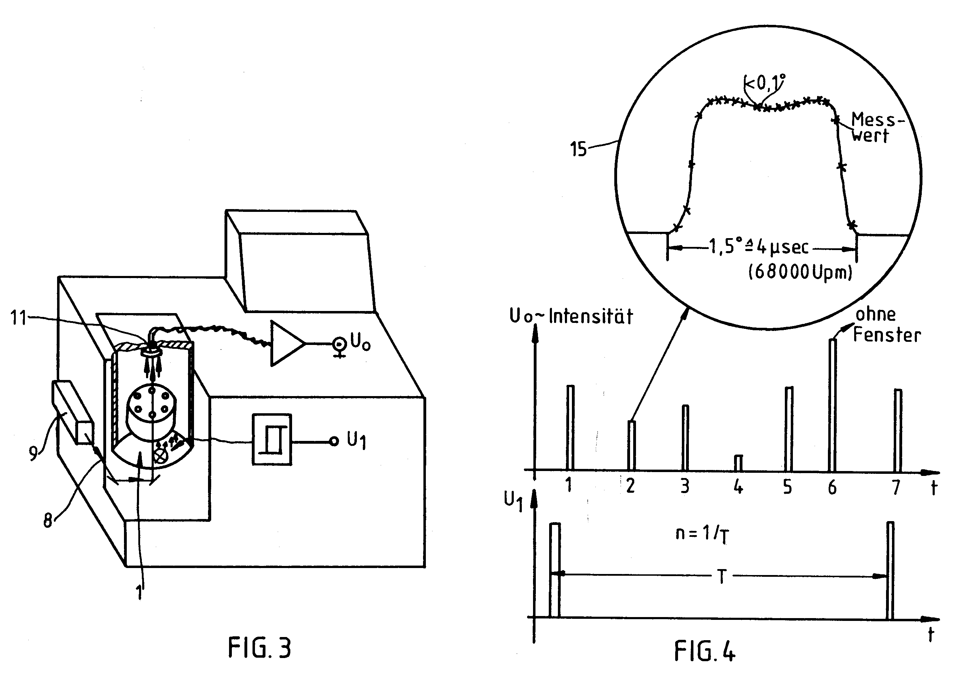

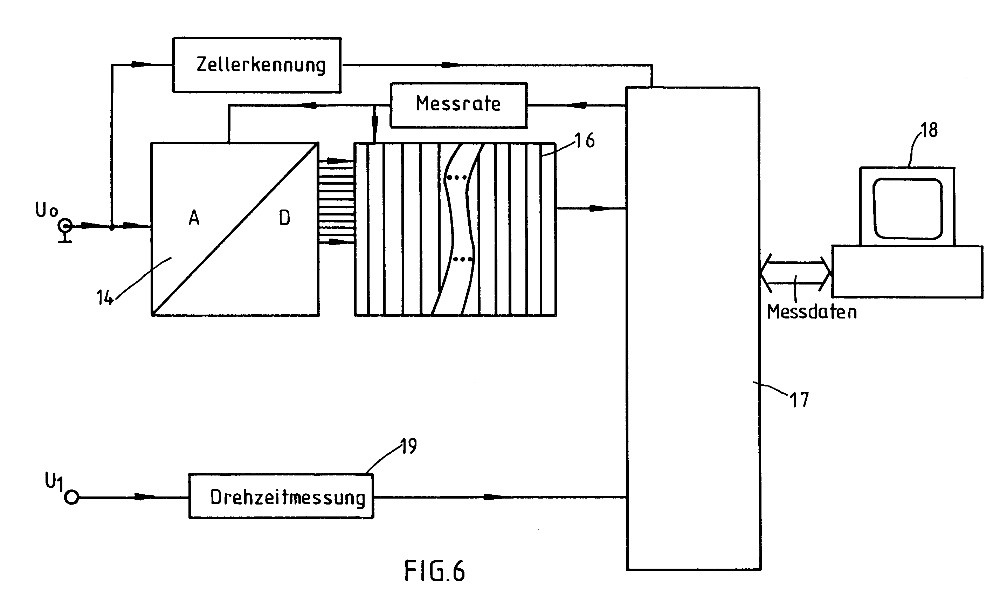

Die Vorgehensweise hierzu wird prinzipiell an Hand der Fig. 4 bis 6 erläutert.

Die Messung der Lichtdurchlässigkeit des Zellprofils erfolgt durch einen schnellen 12-bit AD-Wandler 14 (Typ MOD 1205 MB der Firma Analog Devices), der rechnergesteuert eine Zerlegung des anstehenden Meßsignals der Zelle in Einzelschritte (vergl. 15 in Abb. 4 vornimmt, wobei die Auflösung besser als 0,1° Zellwinkel ist. Bei einem Zellwinkel von beispielsweise 1,5° bedeutet dies, daß das Intensitätsprofil der Zelle quer zur Zellängsrichtung mit mindestens 15 Meßpunkten erfaßt wird. Die Meßwerte werden in einem schnellen Speicher 16 gepuffert. Für den AD-Wandler stehen dann bei einer Drehzahl von 68.000 min$^{-1}$ pro Wandlung nur $0{,}25 \cdot 10^{-6}$ s zur Verfügung. Seine Mindestwandeldauer beträgt $0{,}2 \cdot 10^{-6}$ s. Diese Zellprofilmessung in einer Zentrifugenzelle tangential zur Bewegungsrichtung des Rotors erfolgt hier erstmalig und ermöglicht die Beobachtung von Sedimentationsbzw. Flotationsfronten, während die bisherigen Methoden nur Mittelwerte über das gesamte Querprofil hinweg liefern.

Zur weiteren Auswertung werden die Meßwerte aus dem schnellen Speicher 16 in den Arbeitsspeicher eines Mikroprozessorsystems 17 übernommen. Dieser berechnet entweder einen Mittelwert oder einen Maximalwert. Bei Durchführung einer Zellprofilauswertung unterbleibt diese Mittelwertbzw. Maximalwertbildung und das erhaltene Zellprofil wird ausgedruckt. Bei der üblicherweise ablaufenden Messung werden jedoch diese Messwerte auf einen pro Zelle reduziert. Dieser Messwert wird dann in einem definierten Speicherplatz in dem Arbeitsspeicher des Rechners 18 abgelegt. Der Rechner 18 übernimmt kontinuierlich während des Versuchs die anfallenden Messdaten vom Mikroprozessor 17. Diese bestehen aus dem Messzeitpunkt, der aktuellen Drehzeit 19 und der Intensität der Einzelzellen. Zusätzlich berechnet der Rechner 18 hieraus das Integral $\omega^2 \cdot t$ und unter Verwendung anderer physikalischer Daten, wie Dichtedifferenz und Viskosität, den Teilchendurchmesser.

Überschreitet dieser Wert 10.000 nm (obere Erfassungsgrenze), so wird der erste Messwert im Rechner abgespeichert. Die Übernahme des nächsten Messwertes erfolgt, wenn der kontinuierlich berechnete und kontinuierlich abnehmende Durchmesser um einen bestimmten prozentualen Wert (z.B. um 1,8 % oder mehr) geringer ist als der vorausgegangene Wert. Im genannten Beispiel geschieht das, wenn der Durchmesser auf 9.820 nm oder auf einen noch kleineren Wert abgesunken ist.

Vor der Übernahme des zweiten Messwertes werden die zwischenzeitlich im Rechner 18 eingegangenen Meßdaten zur Bildung eines zeitlichen Mittelwertes verwendet, so daß jeder Einzelwert der zeitliche Mittelwert aus bis zu 150 Einzelmessungen sein kann. Die für jede einzelne der 7 Zellen erhaltene Beziehung zwischen Lichtintensität und Durchmesser wird in bekannter Weise in einen Trübungs-Durchmesser-Zusammenhang umgerechnet und anschließend die Mie'sche Streulichttheorie und der Verdünnungseffekt eingerechnet. Damit wird der Konzentrations-Durchmesser-Zusammenhang, d.h. die Teilchengrößenverteilung, ermittelt.

Die geschilderte Profilerfassung ermöglicht weitgehende Einblicke in den Ablauf von Sedimentations- und Flotationsvorgängen, was zu überraschenden Ergebnissen führt.

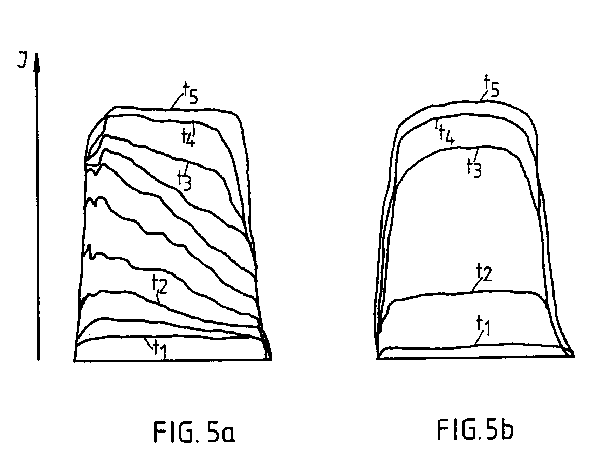

So ergibt die Messung der Lichtdurchlässigkeit des Zellquerprofils bei einem Eichlatex homogener Teilchengröße während des Sedimentationsvorganges den in Abb. 5a wiedergegebenen zeitlichen Verlauf der Lichtdurchlässigkeit des Zellquerprofils, wobei mit wachsender Versuchsdauer ($t_1$, $t_2$...$t_5$) die Lichtdurchlässigkeit zwar generell zunimmt, diese im linken Teil des Zellsektors aber höher ist als im rechten.

Dies ist zwanglos auf das Vorliegen einer thermischen Dichtekonvektionsströmung zurückzuführen.

Die Erkennung dieser Störung des Sedimentationsvorganges war ausschließlich durch die neuartige Zellquerprofilmessung möglich.

Die Kenntnis dieser Störung führte zur Verwendung von Titanmetall als neues Zellmaterial (verbesserte Wärmeleitung) und zur bereits beschriebenen Reduktion des Zellwinkels (schnellere Wärmeabfuhr).

Der Erfolg dieser Maßnahmen geht aus Fig. 5b hervor; die Verwendung derartiger Zellen beseitigt die Konvektionsströmung.

Die Messung der Lichtdurchlässigkeit des Zellquerprofils bietet ganz generell die Möglichkeit einer Überprüfung, ob erzielte Ergebnisse richtig sind oder nicht, insofern Konvektionsströmungen generell zu unzutreffenden Ergebnissen führen.

Weiterhin können aufgrund des schnellen Empfängers die in den zwei Sektoren 7a, 7b einer Doppelsektorzelle (gemäß Fig. 2b) ablaufenden Sedimentationsvorgänge getrennt erfaßt werden. Damit können in je einer Zelle eines Mehrlochrotors zwei unterschiedliche Substanzen bezüglich ihrer Teilchengrößenverteilung gleichzeitig untersucht werden, z.B. in einem Achtlochrotor anstelle von 7 Proben 14 Proben.

Die Zuordnung der 8 bzw. 16 aufeinanderfolgenden Meßsignale zu den Zellen kann nach zwei verschiedenen Methoden erfolgen.

Die erste Methode (vergl. Fig. 3), beruht auf einer am Mehrlochrotor 1 angebrachten Steuerscheibe 12, die pro Rotorumdrehung mit Hilfe einer Reflexlichtschranke 13 ein Steuersignal liefert. Das an der Reflexlichtschranke 13 abgegriffene Steuersignal führt zur Erkennung des ersten darauffolgenden Spannungssignals an der Pin-Diode 11 als von Zelle 1 stammend, das darauffolgende als von Zelle 2 stammend usw. Die Zelle 8 enthält keine Probe und liefert lediglich die Lichtintensität $I_0$ des Lasers 9 als Vergleichsstrahl. Durch Verhältnisbildung werden die in Zelle 1 bis 7 gemessenen

Intensitäten auf $I_0$ bezogen.

Bei der zweiten Methode der Zuordnung wird keine Steuerscheibe benötigt. Die Zuordnung der Meßsignale zu den einzelnen Zellen erfolgt hier über die Zelle 8, die keine Probe und auch keine Fenster enthält (Luftzelle) und dadurch stets die höchste Lichtdurchlässigkeit aufweist.

Bei der zuerst beschriebenen Methode erfolgt die Erfassung der einzelnen Signale in der Weise, daß der Signalbeginn durch einen Signalschwellenwert von z.B. 4% der maximalen Intensität festgelegt ist. Dies bedeutet, daß die Erfassung nur funktioniert, wenn eine gewisse Mindestdurchlässigkeit jeder Zelle gegeben ist.

Demgegenüber entfällt bei dem zweiten Verfahren diese Voraussetzung, da jeder Umlauf des Rotors meßsignalmäßig total digitalisiert wird. Die Erkennung der Signale geschieht dadurch, daß die Umdrehungszeit $t_o$, die bis zur Wiederkehr der Luftzelle vergangen ist, in 8 gleiche Teile (8-Loch Rotor) zerlegt wird und die zu den Zeitpunkten

$$ t + \frac{n \cdot t_o}{8} $$

($n$ = 1,2,3...7) ($t$ = Versuchsdauer) anstehenden Meßsignale den Zellen 1 - 7 zugeordnet werden.

Dies bietet erstmals die Möglichkeit auch Feinstanteile in Dispersionen zu bestimmen, indem zusätzlich zu einer Messung mit normaler Latexkonzentration eine zweite Messung mit z.B. 10-facher Konzentration durchgeführt wird. Die Auswertung der zweiten Messung wird nur unterhalb des Durchmessers des Hauptanteils an gröberen Teilchen durchgeführt und anschließend in die bei normaler Konzentration gemessene Verteilung eingerechnet. Hierbei wird die durch den Feinstanteil verursachte Trübung über das bekannte Konzentrationsverhältnis zwischen hoch- und normalkonzentrierter Probe in die normalkonzentrierte Probe einbezogen.

Eine derartige Versuchsdurchführung ist bei der zuerst geschilderten Methode unmöglich, da der zur Zellzuordnung erforderliche Signalschwellenwert wegen zu geringer Lichtdurchlässigkeit der Zelle im Fall der erhöhten Konzentration nicht erreicht wird.

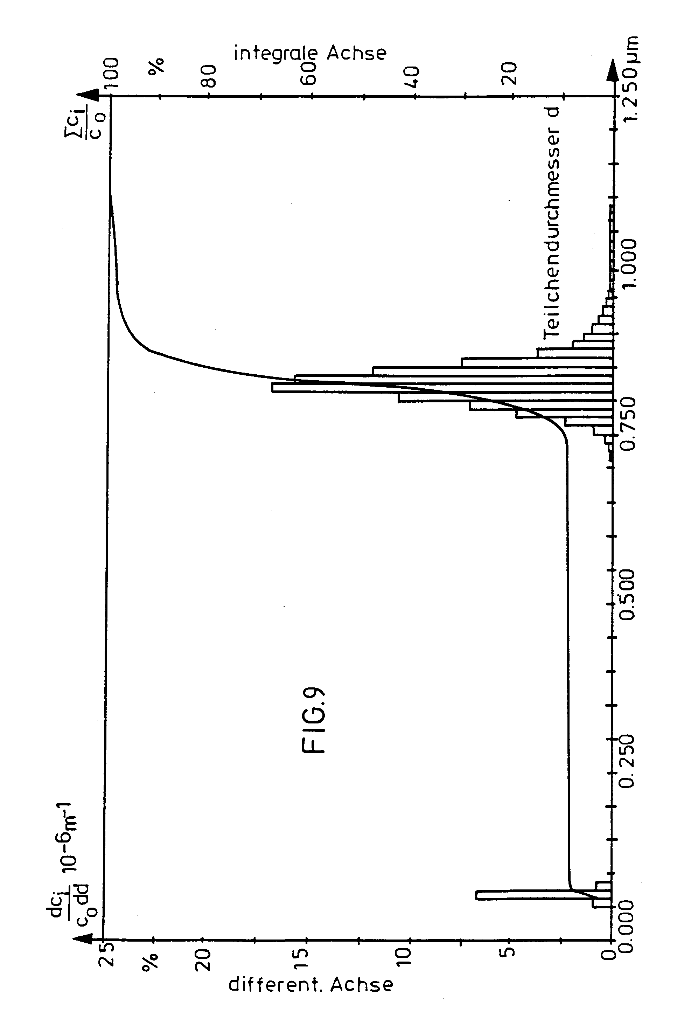

Mit der zweiten Variante der Zuordnung lassen sich beispielsweise noch 9 Gew.-% einer Polystyroldispersion mit einem Durchmesser von 67 nm neben 91 Gew.-% einer Polystyroldispersion von 830 nm Durchmesser sicher ermitteln (vergl. Fig. 9).

Durch diese erstmals mögliche Bestimmung von Feinstanteilen in Dispersionen wird eine bisher nicht erreichte Genauigkeit bei der Bestimmung der massenanteilsmäßigen Teilchengrößenbestimmung von Dispersionen erreicht. Dieser Feinstanteil von Dispersionen ist von besonderer Wichtigkeit, wenn bei einer chemischen Reaktion z.B. einer Pfropfreaktion, eine Reaktionskomponente einen solchen Feinstanteil besitzt.

Ein weiterer Fortschritt gegenüber dem Stand der Technik ist die Definition des Meßortes des Lichtstrahls 8 innerhalb des Sektors 7. Diese Festlegung erfolgt nicht durch Verwendung von schwer herzustellenden bedampften Zellfenstern mit einem unbedampften Spalt oder durch eine am Fenster befindliche spaltförmige Blende, die sich bei hoher Umdrehungszahl deformiert, sondern durch den Lichtstrahl selbst, da der Laser 9 einen sehr eng begrenzten definierten Strahl erzeugt. Die Bestimmung seiner Lage innerhalb des Zellsektors erfolgt experimentell, indem ein Latex mit bekannter Dichte in Sedimentation und in Flotation gemessen wird und die Lage des Laserstrahls bei der Berechnung des Durchmessers so lange verändert wird, bis beide Sedimentationsrichtungen gleiche Durchmesser liefern. Diese Methode erfordert kein schwieriges Ausmessen der Abstände des Durchtrittsortes des Laserstrahls vom Zellboden oder Meniskus der Zelle und erspart schwierig zu verwirklichende photographische Aufnahmen. Hierzu wird lediglich eine Messung in Flotation und eine in Sedimentation mit einem Latex bekannter Dichte, z.B. Polystyrollatex durchgeführt, wobei noch nicht einmal dessen Teilchengröße bekannt zu sein braucht.

Meßbeispiel

Als Vergleichsbeispiele seien die Teilchengrößenverteilung eines Polystyroleichlatex angeführt, der praktisch nur Teilchen in einem Durchmesserbereich von ca. 510 nm bis 540 nm enthielt. Dies konnte anhand elektronenmikroskopischer Aufnahmen direkt verifiziert werden.

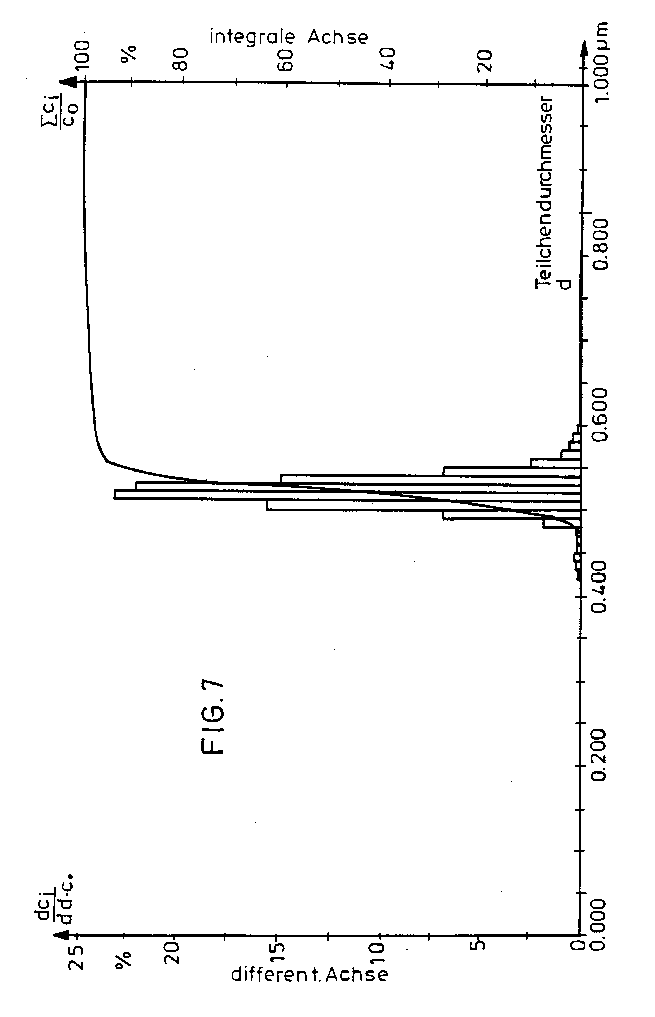

Die mit der neuen Ultrazentrifuge ermittelte Teilchengrößenverteilung ist in Figur 7 dargestellt. Sie zeigt eine enge Verteilung ($d_{10}$-Wert 500 nm, $d_{90}$-Wert 545 nm) mit einer mittleren Teilchengröße ($d_{50}$-Wert) von 521 nm. Die $d_{10}$, $d_{50}$ und $d_{90}$-Werte sind hierbei die Durchmesser, die 10 %, 50 % und 90 % der summativen Massenverteilungskurve entsprechen.

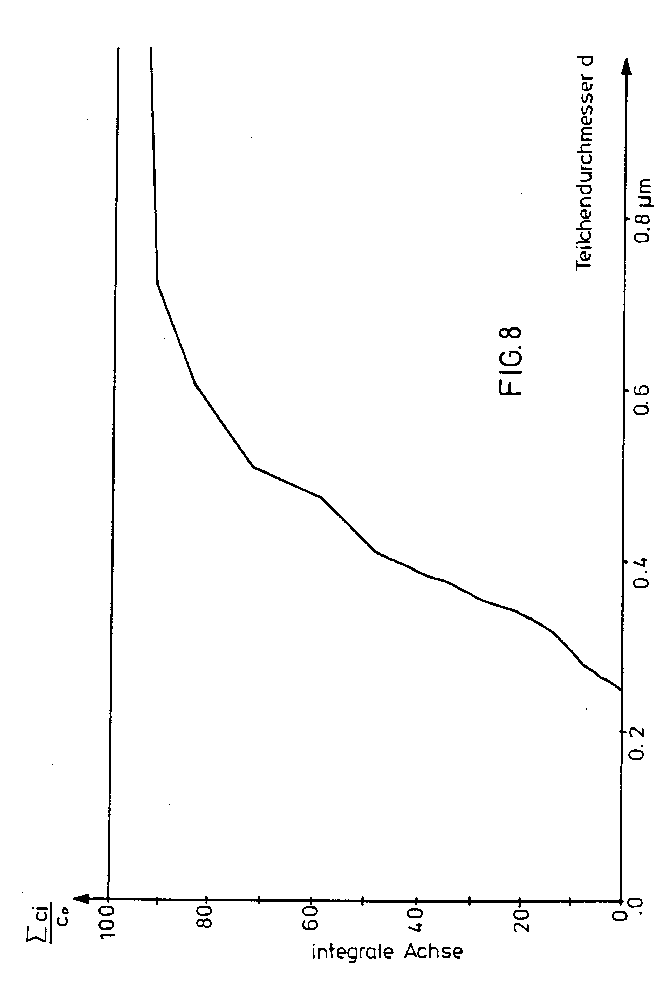

Zum Vergleich ist in Fig. 8 eine Summenkurve dargestellt, wie sie mit einer Ultrazentrifuge nach dem Stand der Technik an demselben Polystyroleichlatex bestimmt wurde. Die gemessene Kurve lieferte eine viel zu breite Teilchengrößenverteilung ($d_{10}$-Wert 291 nm; $d_{90}$-Wert 693 nm), ist also mit einem systematischen Fehler behaftet. Dieser besteht in einer Störung des Sedimentationsvorganges durch die Konvektionsströmung, die durch Messung der Lichtdurchlässigkeit des Zellquerprofils erkannt wurde, Abb. 5a. Zu ihrer Beseitigung wurden die angegebenen Gegenmaßnahmen ergriffen, die zu ihrer Beseitigung führten, vergl. Abb. 5b. Der Erfindung kommt somit das Verdienst zu, derartige systematische Fehler bei der Untersuchung von Dispersionen mit einem Teilchendurchmesser >400 nm erkannt und beseitigt zu haben.

Anhand von Fig. 9 wird der durch die zweite Variante der Zuordnung mögliche Fortschritt demonstriert. Bei einer 10-fach so hohen Ausgangskonzentration des Latex lassen sich noch 9 Gew.-% eines Polystyrollatex mit 67 nm Durchmesser sicher bestimmen. Ohne diese nur durch die Totaldigitalisierung mögliche starke Erhöhung der Ausgangskonzentration wäre der feinteilige Latex nicht erfaßbar.

## Patentansprüche

1. Ultrazentrifuge zur Bestimmung der massenmäßigen Teilchengrößenverteilung von Dispersionen, mit einem Rotor, in dessen Aufnahmeschächten (2) sich Meßzellen (3) befinden, in deren Zellmittelstücken (6) Probenkammern in Form von sektorförmigen Spalten (7,7a,7b) für die Aufnahme der zu untersuchenden Proben angeordnet sind, und mit einer optischen Zusatzeinrichtung (9, 10, 11) zur fotoelektrischen Messung der Lichtdurchlässigkeit der Proben in den Zellen, dadurch gekennzeichnet, daß die sektorförmigen Spalte (7) in den Zellmittelstücken (6) einen Sektorwinkel $\alpha$ von 1,0° bis 1,9° aufweisen.

2. Ultrazentrifuge nach Anspruch 1, dadurch gekennzeichnet, daß das Zellmittelstück (6) aus einem gegenüber wäßrigen basischen Medien resistenten Metall, vorzugsweise aus Titan, besteht.

3. Ultrazentrifuge nach Anspruch 1 bis 2, dadurch gekennzeichnet, daß das Zellmittelstück (6) als Doppelsektorzelle ausgebildet ist und der fotoelektrische Detektor in der optischen Zusatzeinrichtung aus einer Pin-Diode (11) besteht.

4. Ultrazentrifuge nach Anspruch 1 bis 3, dadurch gekennzeichnet, daß mit der Pin-Diode Querprofilmessungen der Lichtdurchlässigkeit der Ultrazentrifugenzelle möglich sind, die die Erkennung von Störungen der Messung durch Konvektion gestatten.

5. Ultrazentrifuge nach Anspruch 1 bis 4, dadurch gekennzeichnet, daß die Zellen (3) mit unterschiedlichen Proben beschickt sind und mit Hilfe einer den Mehrlochrotor (1) abtastenden Reflexlichtschranke (13) eine elektronische Zuordnung der Meßsignale zu den einzelnen Proben erfolgt.

6. Ultrazentrifuge nach Anspruch 1 bis 5, dadurch gekennzeichnet, daß die Zellen (3) mit unterschiedlichen Proben beschickt sind und eine offene, leer bleibende Zelle als Referenzzelle ausgebildet ist und daß die elektronische Zuordnung der Meßsignale zu den einzelnen Proben über die Phasenverschiebungen zwischen dem Referenzzellensignal und den an den Zellen anstehenden digitalisierten Meßsignalen erfolgt.

## Claims

1. Ultracentrifuge for determining the mass particle size distribution of dispersions, having a rotor, situated in whose receiving shafts are measuring cells (3), in the cell middle pieces (6) of which are disposed sample chambers in the form of sector-shaped gaps (7, 7a, 7b) for receiving the samples to be examined, and having an optical auxiliary device (9, 10, 11) for photoelectric measurement of the light transmitting capacity of the samples in the cells, characterized in that the sector-shaped gaps (7) in the cell middle pieces (6) have a sector angle a of 1.0° to 1.9°.

2. Ultracentrifuge according to claim 1, characterized in that the cell middle piece (6) is made of a metal, preferably titanium, which is resistant to aqueous alkaline media.

3. Ultracentrifuge according to claims 1 to 2, characterized in that the cell middle piece (6) takes the form of a double-sector cell and the photoelectric detector in the optical auxiliary device is a PIN diode (11).

4. Ultracentrifuge according to claims 1 to 3, characterized in that the PIN diode enables cross-sectional measurements of the light transmitting capacity of the ultracentrifuge cell, which allow the detection of faults in the measurement by convection.

5. Ultracentrifuge according to claims 1 to 4, characterized in that the cells (3) are charged with different samples and electronic allocation of the measuring signals to the individual samples is effected with the aid of a reflex light barrier (13) which scans the multihole rotor (1).

6. Ultracentrifuge according to claims 1 to 5, characterized in that the cells (3) are charged with different samples and an open cell which is left empty is designed as a reference cell, and that the electronic allocation of the measuring signals to the individual samples is effected via the phase displacements between the reference cell signal and the digitized measuring signals present at the cells.

chargées d'échantillons différents et une cellule ouverte, demeurant vide, est conformée en cellule de référence et en ce que l'affectation électronique des signaux de mesure aux échantillons individuels est effectuée par le déphasage entre le signal de la cellule de référence et les signaux numérisés de mesure provenant des cellules.

**Revendications**

1.   Ultracentrifugeuse pour la détermination de la distribution des grandeurs massiques de particules dans des dispersions, comprenant un rotor, dans des fosses de logement (2) duquel se trouvent des cellules de mesure (3), dans des pièces centrales (6) desquelles sont disposées des chambres à échantillon en forme de fentes (7, 7a, 7b) ayant la forme de secteurs pour le logement des échantillons devant être étudiés, ladite ultracentrifugeuse comprenant par ailleurs un dispositif optique auxiliaire (9, 10, 11) de mesure photo-électrique de la perméabilité à la lumière des échantillons se trouvant dans les cellules, caractérisée en ce que les fentes (7) en forme de secteurs se trouvant dans les pièces centrales (6) des cellules inscrivent un angle de secteur $\alpha$ de 1,0° à 1,9°.

2.   Ultracentrifugeuse selon la revendication 1, caractérisée en ce que la pièce centrale (6) des cellules est en métal résistant aux fluides basiques aqueux, de préférence en titane.

3.   Ultracentrifugeuse selon la revendication 1 ou 2, caractérisé en ce que la pièce centrale (6) des cellules est conformée en cellule à secteur double et le détecteur photo-électrique du dispositif optique supplémentaire consiste en une diode PIN (11).

4.   Ultracentrifugeuse selon les revendications 1 à 3, caractérisée en ce que la diode PIN permet des mesures du profil transversal de la perméabilité à la lumière de la cellule de l'ultracentrifugeuse qui permettent la détection de perturbations de la mesure par convection.

5.   Ultracentrifugeuse selon les revendications 1 à 4, caractérisée en ce que les cellules (3) sont chargées d'échantillons différents et en ce qu'une affectation électronique des signaux de mesure aux échantillons individuels est effectuée à l'aide d'un barrage photo-électrique réflexe (13) qui explore le rotor (1) à plusieurs trous.

6.   Ultracentrifugeuse selon les revendications 1 à 5, caractérisée en ce que les cellules (3) sont

FIG. 1

FIG. 2a

FIG. 2b

FIG.4

FIG.3

FIG. 5a

FIG. 5b

EP 0 362 733 B1

Zellerkennung

Messrate

A / D

14

16

Uo

Messdaten

18

17

U1

Drehzeitmessung

19

FIG.6

FIG.7

$\dfrac{dc_i}{d\,d\cdot c_\cdot}$

$\dfrac{\Sigma c_i}{c_o}$

different. Achse

integrale Achse

Teilchendurchmesser d

EP 0 362 733 B1

FIG.8

FIG.9